# EUROPEAN PATENT APPLICATION

(11) **EP 4 703 300 A1**
(43) Date of publication of application: **04.03.2026**
(21) Application number: 24795946.3
(22) Date of filing: 18.04.2024
(51) Int. Cl.: B65G 1/137

(54) **PICKING METHOD AND APPARATUS, ELECTRONIC DEVICE, AND READABLE STORAGE MEDIUM**

(30) Priority: 27.04.2023 CN 202310477329
(71) Applicant: Beijing Geekplus Technology Co. Ltd, Beijing 100102 (CN)
(72) Inventor: WU, Wencai, Beijing 100102 (CN)
(74) Representative: De Sandre, Emanuele
(86) International application number: PCT/CN2024/088611
(87) International publication number: WO 2024/222565

(57) **Abstract**

The present disclosure provides a picking method and apparatus, an electronic device, and a readable storage medium. The picking method comprises: generating a carrying task corresponding to each piece of goods information on the basis of the plurality of pieces of goods information in a warehouse exit order, then respectively sending the carrying tasks to a plurality of first robots, such that the first robots carry, on the basis of the corresponding carrying tasks, target carriers corresponding to the carrying tasks to parking points of a target workstation; determining a picking sequence of the plurality of target carriers on the basis of picking information of each target carrier among the plurality of target carriers, wherein the picking information comprises a picking duration and/or a picking priority; and on the basis of the picking sequence of the plurality of target carriers, sending a target picking instruction to a picking device, such that the picking device carries target goods in the target carriers to the target workstation according to the picking sequence of the plurality of target carriers.

## Description

### CROSS-REFERENCE TO RELATED APPLICATION

This application claims priority to Chinese Patent Application Serial No. 202310477329.6 and filed on April 27, 2023, the entire content of which is incorporated herein by reference.

### FIELD

The present disclosure relates to the field of intelligent warehousing, and more particularly to a picking method and apparatus, an electronic device and a readable storage medium.

### BACKGROUND

In recent years, the booming development of robot technology has brought great technological changes to the entire logistics industry, and "cargo-to-people" robot system brings new technology and new design concepts to the warehousing industry. The cargo-to-people robot system includes a variety of ways, for example, "shelf-to-people". The shelf-to-people means that the robot transports a target shelf to a parking point, and the picking device at the parking point transports the cargo on the shelf to the workstation, such that a stuff at the workstation may complete the picking of the cargo.

Typically, the workstation may include a plurality of parking points, and after the robot transports the each shelf from a cargo storage area to each parking point, the picking device may perform a picking task on each shelf in sequence according to the time order of the arrival of each shelf at the parking point. However, there is a problem of low utilization rate of the robot when the picking device performs the picking task according to the time order of the arrival of each shelf at the parking point.

### SUMMARY

The present disclosure provides a picking method and apparatus, an electronic device and a readable storage medium.

In a first aspect, embodiments of the present disclosure provide a picking method, which is applied to a control device and includes following steps. Firstly, a transport task corresponding to each piece of cargo information is generated based on a plurality of pieces of cargo information in an outbound order. Secondly, respective transport tasks are sent to a plurality of first robots, such that each first robot transports, based on a corresponding transport task, a target carrier corresponding to the transport task to a parking point of a target workstation, in which the target workstation includes a plurality of parking points. Then, a picking order of the plurality of target carriers is determined based on picking information of each target carrier among the plurality of target carriers, in which the picking information includes a picking duration and/or a picking priority. Finally, a target picking instruction is sent to a picking device based on the picking order of the plurality of target carriers, in which the target picking instruction is used to instruct the picking device to transport a target cargo in each target carrier to the target workstation in accordance with the picking order of the plurality of target carriers.

In a second aspect, embodiments of the present disclosure provide a picking method, which is applied to a picking device and includes followings steps. Firstly, a target picking instruction is received. Secondly, in a case where each first robot among a plurality of first robots transports, based on a corresponding transport task, a target carrier corresponding to the transport task to a parking point of a target workstation, in response to the target picking instruction, transporting a target cargo on each target carrier to the target workstation in accordance with a picking order of a plurality of target carriers. The target workstation includes a plurality of parking points; the picking order of the plurality of target carriers is determined based on picking information of each target carrier among the plurality of target carriers, and the picking information includes a picking duration and/or a picking priority.

In a third aspect, embodiments of the present disclosure provide a picking apparatus, including a task generation module, a task sending module, a picking order determining module, and an instruction sending module. The task generation module is configured to generate a transport task corresponding to each piece of cargo information based on a plurality of pieces of cargo information in an outbound order. The task sending module is configured to send respective transport tasks to a plurality of first robots, such that each first robot transports, based on the corresponding transport task, a target carrier corresponding to the transport task to a parking point of a target workstation, in which the target workstation includes a plurality of parking points. The picking order determining module is configured to determine a picking order of the plurality of target carriers based on picking information of each target carrier among the plurality of target carriers, in which the picking information includes a picking duration and/or a picking priority. The instruction sending module is configured to send a picking instruction to a picking device in accordance with the picking order of the target carriers, in which the picking instruction is used to instruct the picking device to transport a target cargo on the plurality of target carriers to the target workstation.

In a fourth aspect, embodiments of the present disclosure provide another picking apparatus, including an instruction receiving module and a transporting module. The instruction receiving module is configured to receive a target picking instruction. The transporting module is configured to, in a case where each first robot among a plurality of first robots transports, based on a corresponding transport task, a target carrier corresponding to the transport task to a parking point of a target workstation, in response to the target picking instruction, transport a target cargo on each target carrier to the target workstation in accordance with a picking order of a plurality of target carriers. The target workstation includes a plurality of parking points; the picking order of the plurality of target carriers is determined based on picking information of each target carrier among the plurality of target carriers, and the picking information includes a picking duration and/or a picking priority.

In a fifth aspect, embodiments of the present disclosure further provide an electronic device including a memory and a processor, the memory storing a computer program, in which the processor executes the computer program to implement steps of the picking method of the first aspect and the second aspect.

In a sixth aspect, embodiments of the present disclosure further provide a computer-readable storage medium storing computer instructions, the computer instructions are used to cause the computer to implement steps of the picking method of the first aspect and the second aspect.

In a seventh aspect, embodiments of the present disclosure provide a computer program product including a computer program stored on a non-transitory computer-readable storage medium, the computer program including program instructions, the computer executes the program instructions to implement steps of the picking method of the first aspect and the second aspect.

In an eighth aspect, embodiments of the present disclosure provide a computer program, a processor executes the computer program to implement steps of the picking method of the first aspect and the second aspect.

### BRIEF DESCRIPTION OF THE DRAWINGS

To describe technical solutions in embodiments of the present disclosure more clearly, the following will briefly introduce the accompanying drawings required for the description of the embodiments. Obviously, the accompanying drawings described below show some embodiments of the present disclosure, and those skilled in the art can obtain other drawings based on these drawings without paying creative efforts.
FIG. 1 is a schematic block diagram of a picking scenario provided by an embodiment of the present disclosure.
FIG. 2A is a schematic block diagram of a transport scenario provided by an embodiment of the present disclosure.
FIG. 2B is a flowchart of a picking method provided by an embodiment of the present disclosure.
FIG. 3A is a flowchart of another picking method provided by an embodiment of the present disclosure.
FIG. 3B is a flowchart of yet another picking method provided by an embodiment of the present disclosure.
FIG. 3C is a flowchart of still another picking method provided by an embodiment of the present disclosure.
FIG. 4 is a flowchart of still another picking method provided by an embodiment of the present disclosure.
FIG. 5 is a flowchart of still another picking method provided by an embodiment of the present disclosure.
FIG. 6 is a flowchart of still another picking method provided by an embodiment of the present disclosure.
FIG. 7 is a flowchart of still another picking method provided by an embodiment of the present disclosure.
FIG. 8 is a flowchart of still another picking method provided by an embodiment of the present disclosure.
FIG. 9 is a flowchart of still another picking method provided by an embodiment of the present disclosure.
FIG. 10 is a schematic block diagram of a scenario of a temporary storage area provided by an embodiment of the present disclosure.
FIG. 11 is a flowchart of still another picking method provided by an embodiment of the present disclosure.
FIG. 12 is a schematic block diagram of a picking apparatus provided by an embodiment of the present disclosure.
FIG. 13 is a schematic block diagram of another picking apparatus provided by an embodiment of the present disclosure.
FIG. 14 is a schematic block diagram of an electronic device provided by an embodiment of the present disclosure.

### DETAILED DESCRIPTION OF THE DISCLOSURE

In order to enable a person skilled in the art to better understand the technical solutions in embodiments of the present disclosure, and to enable the above objectives, features and advantages of embodiments of the present disclosure to be more obvious and understandable, the technical solutions in embodiments of the present disclosure are described in further detail below in conjunction with the accompanying drawings.

In an intelligent warehousing system, when a robot receives a transport instruction, it can transport a corresponding carrier from a cargo storage area to a parking point of a designated workstation according to the transport instruction.

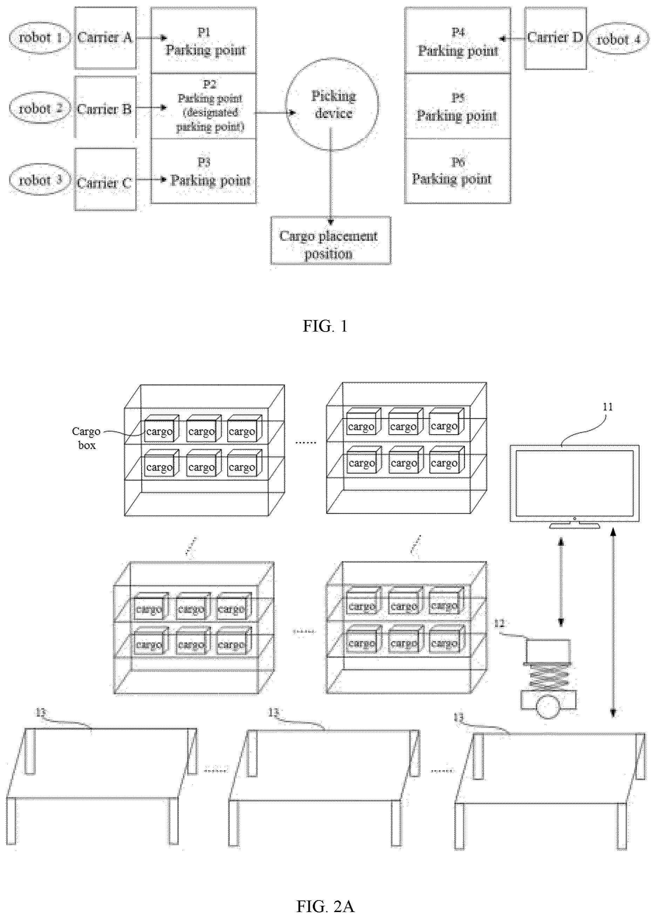

FIG. 1 is a schematic block diagram of a picking scenario provided by an embodiment of the present disclosure. As illustrated in FIG. 1, a workstation may be provided with a plurality of parking points, a picking device (e.g., a robotic arm) may perform a picking task on each shelf according to a time order of the arrival of each shelf at each parking point, and after the picking device completes the picking task, a robot waiting at the corresponding parking point transports the shelf where the picking task has been completed back to the cargo storage area.

For example, as illustrated in FIG. 1, the robot 1 transports the carrier A to the parking point P1 according to the corresponding shelf transport instruction, the robot 2 transports the carrier B to the parking point P2 according to the corresponding shelf transport instruction, the robot 3 transports the carrier C to the parking point P3 according to the corresponding shelf transport instruction, and the robot 4 transports the carrier D to the parking point P4 according to the corresponding shelf transport instruction. If an arrival order of each shelf arriving at the corresponding parking point is: carrier B (arriving at P2), carrier C (arriving at P3), carrier D (arriving at P4), carrier A (arriving at P1), then the picking device performs the picking task on carrier B, carrier C, carrier D, carrier A in turn according to the arrival order of each carrier arriving at the parking point, i.e., the picking device transports the target cargo in each carrier to a cargo placement position of the workstation, to enable a staff to pick the target cargo. After the picking is completed, the electronic device sends a transport instruction to a robot waiting at the corresponding parking point so that the robot can transport the shelf back to the cargo storage area.

In some examples, there may be a problem of a low utilization rate of the robot when the picking device performs the picking tasks in an order of the arrival of each carrier at the parking point. For example, when there are more target cargo on the carrier arriving at the parking point of the workstation first, its corresponding picking duration is longer, and when the picking device prioritizes the execution of picking on the carrier, the other carriers parked at the parking point need to wait for a longer time, i.e., the robot is not able to be released in time to perform other transport tasks, which results in a lower transport efficiency of the robot. In other words, the related art does not consider the duration of different picking tasks when performing picking tasks according to the time order of arrival of each carrier at the parking point, and in the case where the picking task of the carrier has a shorter duration and the arrival of the carrier at the parking point is later, the carrier is required to wait for a longer period of time at the parking point, which results in the problem of a lower utilization rate of the robot.

Based on this, the present disclosure provides a picking method and apparatus, an electronic device, and a readable storage medium, which may determine a picking order of each carrier according to a picking duration and/or a picking priority corresponding to each carrier, and when picking according to the picking order, the picking device may reduce the waiting duration of each robot at the parking point, release each robot in advance to perform other transport tasks, and improve the utilization rate of the robot.

In some examples, the cargo may be placed individually on a carrier or stored in a cargo box, a shelf, a pallet, or a tote. When performing a transport task, the picking device may transport either the cargo or the container such as a pallet, a shelf, a tote, etc., which is not limited by the present disclosure. Embodiments of the present disclosure are illustrated by way of example with the cargo stored in a cargo box and the cargo box placed on a carrier.

FIG. 2A is a schematic block diagram of a transport scenario provided by an embodiment of the present disclosure. An application scenario of embodiments of the present disclosure is described below in conjunction with FIG. 2A.

As illustrated in FIG. 2A, the application scenario includes an electronic device 11, a robot 12, and a workstation 13. As illustrated in FIG. 1, each workstation 13 may include a plurality of parking points and a picking device.

For example, the electronic device 11 sends a transport instruction to the robot 12, and the robot 12 may transport the target carrier in the cargo storage area to a parking point of the workstation in accordance with the transport instruction, take the target cargo box on the target carrier via the picking device of the workstation, and place it on the workstation for a staff at the workstation 13 to pick the target cargo in the target cargo box.

In some examples, the electronic device 11 is in communication connection with the robot 12 and/or the workstation 13 for data communication. For example, the electronic device 11 may be in communication connection with the robot 12 and/or the workstation 13 via local area network (LAN), wireless local area network (WLAN), and other networks.

For example, the electronic device 11 may be a terminal or a server, or it may be a device deployed with a robot warehouse management system (WMS) and a robot management system (RMS). The terminal may be, but is not limited to, a variety of personal computers, laptops, smartphones, tablets, and portable wearable devices, and the server may be used as a stand-alone server or a cluster of servers including a plurality of servers, which is not limited by embodiments of the present disclosure.

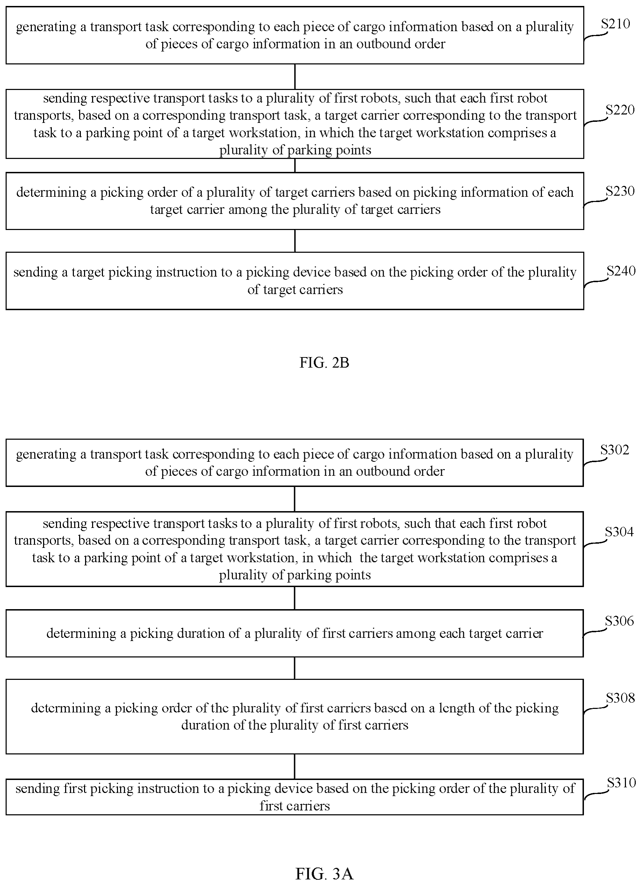

FIG. 2B is a flowchart of a picking method provided by an embodiment of the present disclosure. It should be noted that the picking method illustrated in FIG. 2B may be realized by a control device, the control device may be the electronic device 11 of FIG. 2A, and the following embodiment is illustrated by way of example with the control device being the electronic device. As illustrated in FIG. 2B, the picking method may include steps S210 to S240 as follows.

In S210, a transport task corresponding to each piece of cargo information is generated based on a plurality of pieces of cargo information in an outbound order.

In S220, respective transport tasks are sent to a plurality of first robots, such that each first robot transports, based on a corresponding transport task, a target carrier corresponding to the transport task to a parking point of a target workstation.

The target workstation includes a plurality of parking points.

In some examples, the robot may be a transport robot in a warehouse, and the transport robot may be a robot transporting a carrier or a robot transporting a cargo. The carrier may be a shelf, a cargo box, a material box, a raw box, a pallet, etc., which is limited by embodiments of the present disclosure. The following embodiments are illustrated by way of example with the carrier being a shelf.

For example, the target carrier is a carrier corresponding to a plurality of cargoes in the outbound order, and the first robot is a robot used to transport the target carrier in the warehouse. The number of target carriers may be one or a plurality, and embodiments of the present disclosure are illustrated by way of example with the number of target carriers being a plurality.

In S230, a picking order of the plurality of target carriers is determined based on picking information of each target carrier among the plurality of target carriers.

The picking information includes a picking duration and/or a picking priority.

In some embodiments, when the picking information is the picking priority, the step S230 includes determining a picking order of the plurality of target carriers based on the picking priority of each target carrier. The higher the picking priority of the target carrier, the earlier the picking order of the target carrier.

That is, when the plurality of target carriers have different picking priorities, a picking operation may be performed preferentially on the target carrier having a high picking priority according to a level of the picking priority of each target carrier.

In some embodiments, when the picking information is the picking duration, the step S230 includes determining a picking order of the plurality of target carriers based on the picking duration of each target carrier. The shorter the picking duration of the target carrier, the earlier the picking order of the target carrier.

That is, the picking duration of each target carrier may be determined in advance, and the picking operation may be performed preferentially on the target carrier having a short picking duration according to a length of the picking duration of each target carrier.

In some embodiments, when the picking duration includes the picking priority and the picking duration, the step S230 includes determining a picking order of the plurality of target carriers based on the picking priority and the picking duration of each target carrier.

In some embodiments, determining the picking order of the plurality of target carriers based on the picking priority and the picking duration of each target carrier includes: in a case where the plurality of target carriers include a plurality of first carriers and at least one second carrier and the picking priorities of the first carrier and the second carrier are different, determining a picking order of the plurality of first carriers and the at least one second carrier based on the picking priority of the first carrier and the picking priority of the second carrier; or in a case where the plurality of first carriers have a same picking priority, determining the picking duration of each first carrier among the plurality of first carriers and determining the picking order of the plurality of first carriers based on the picking duration of each first carrier.

In some examples, if the plurality of target carriers include the first carrier and the second carrier with different picking priorities, and the picking priority of the first carrier is higher than the picking priority of the second carrier, the picking operation is performed preferentially on the first carrier; and if the picking priority of the first carrier is lower than the picking priority of the second carrier, the picking operation is performed preferentially on the second carrier.

In some examples, after determining the picking order of the first carrier and the second carrier based on the level of picking priority, if the number of first carriers is a plurality and the plurality of first carriers have the same picking priority, the picking order of each first carrier may be further determined according to the picking duration of each first carrier among the plurality of first carriers.

Therefore, the picking order of each target carrier can be determined by the step S230, and after the picking order of each target carrier is determined, the execution of S240 may be continued.

In S240, a target picking instruction is sent to the picking device based on the picking order of the plurality of target carriers.

The target picking instruction is used to instruct the picking device to transport a target cargo in each target carrier to the target workstation in accordance with the picking order of the plurality of target carriers.

The above picking methods S210-S240 are described in detail below in conjunction with FIGS. 3A to 9.

FIG. 3A is a flowchart of another picking method provided by an embodiment of the present disclosure. The process of the picking method is described below in conjunction with FIG. 3A when the picking information is the picking duration. As illustrated in FIG. 3A, the method includes following steps.

In S302, a transport task corresponding to each piece of cargo information is generated based on a plurality of pieces of cargo information in an outbound order.

In some examples, the outbound order includes at least one to-be-outbound cargo, and cargo information corresponding to each to-be-outbound cargo. The cargo information may include a name of the cargo, a quantity of the cargo, a serial number of the cargo, a bar code of the cargo, a lot number of the cargo, an owner of the cargo, and the like, which is not limited by embodiments of the present disclosure.

By way of example, when the electronic device obtains an outbound order, it may determine, based on the cargo information corresponding to each to-be-outbound cargo in the outbound order, a location of each to-be-outbound cargo in the cargo storage area, i.e., a target carrier corresponding to the to-be-outbound cargo in the cargo storage area, and/or, a target cargo location of the to-be-outbound cargo on the target carrier. Then, the electronic device generates a transport task corresponding to each to-be-outbound cargo based on the target carrier corresponding to the to-be-outbound cargo, and/or the target cargo location of the to-be-outbound cargo on the target carrier.

In some embodiments, the target carrier corresponding to the plurality of to-be-outbound cargo may be a plurality of carriers or may be the same carrier. For example, when the plurality of to-be-outbound cargoes correspond to the same carrier, the plurality of to-be-outbound cargoes may be located in different cargo locations on the carrier.

In some examples, the transport task may include a target carrier, a target cargo location, a target workstation, a travel path, and a parking point of the target workstation, etc. The target cargo location may be the location information of the target cargo box. The transport task may instruct the robot to transport the target carrier where the to-be-outbound cargo in the outbound order is located to the parking point of the target workstation.

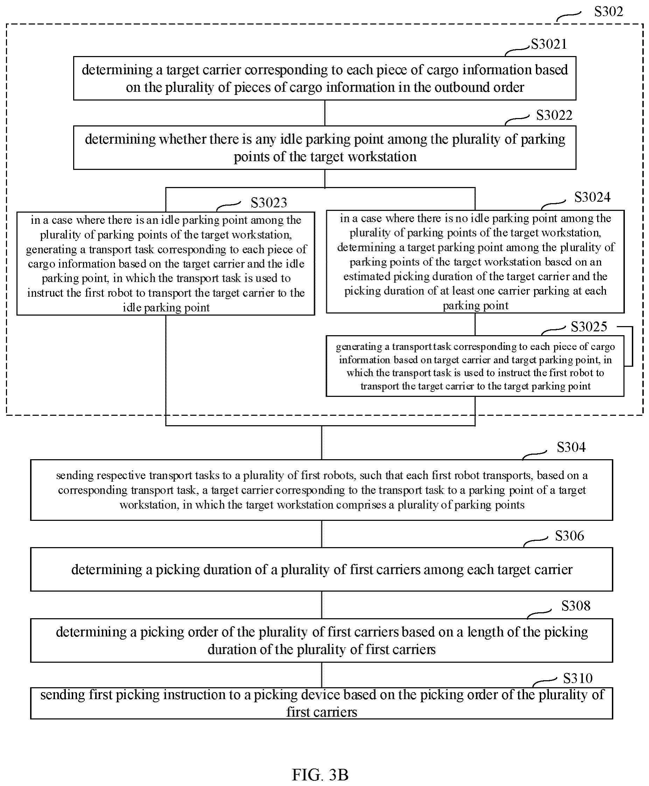

FIG. 3B is a flowchart of yet another picking method provided by an embodiment of the present disclosure. As illustrated in FIG. 3B, the step S302 may include steps S3021 to S3025 as follows.

In S3021: a target carrier corresponding to each piece of cargo information is determined based on the plurality of pieces of cargo information in the outbound order.

In some embodiments, the electronic device may determine a cargo corresponding to each piece of cargo information among the plurality of pieces of cargo information and a target carrier corresponding to the cargo.

For example, the outbound order may include three pieces of cargo information corresponding to a cargo A, a cargo B, and a cargo C, respectively. The electronic device may determine that the cargo A is stored in the carrier A, the cargo B is stored in the carrier B, and the cargo C is stored in the carrier C, based on the three pieces of cargo information in the outbound order. That is, the carrier A, the carrier B and the carrier C are the target carriers corresponding to the outbound order.

In S3022: it is determined whether there is any idle parking point among the plurality of parking points of the target workstation.

In some embodiments, the electronic device may determine whether there is an idle parking point among the plurality of parking points according to the number of carriers parked at each parking point in the target workstation.

In some examples, a carrier or a plurality of carriers may be parked at each parking point of the target workstation.

By way of example, when the number of carriers parked at a parking point is small, such as less than a preset carrier number, the parking point may be referred to as an idle parking point. That is, the idle parking point may be a parking point with the number of parked carriers less than the preset carrier number among the plurality of parking points. It should be noted that the preset carrier number may be set according to needs, and the preset carrier number may be one or a plurality, and embodiments of the present disclosure do not limit the value of the preset carrier number. The following embodiment is illustrated by way of example with the preset carrier number being 1.

For example, in a case where the preset carrier number is 1, if the target workstation includes a P1 parking point, a P2 parking point, and a P3 parking point, and no carrier is currently parked at the P1 parking point, no carrier is currently parked at the P2 parking point, and two carriers are currently parked at the P3 parking point, it may be determined that there is an idle parking point among the plurality of parking points of the target workstation and the P1 parking point and the P2 parking point are idle parking points.

In S3023: in a case where there is an idle parking point among the plurality of parking points of the target workstation, a transport task corresponding to each piece of cargo information is generated based on the target carrier and the idle parking point, in which the transport task is used to instruct the first robot to transport the target carrier to the idle parking point.

In some embodiments, in a case where there is an idle parking point among the plurality of parking points of the target workstation, the number of idle parking points may be one or more, the electronic device may generate a transport task corresponding to each piece of cargo information according to the target carrier and the idle parking point. In other words, in a case where there is an idle parking point among the plurality of parking points, the idle parking point corresponding to each target carrier may be determined.

For example, if the electronic device determines that the P1 parking point and the P2 parking point among the plurality of parking points of the workstation are idle parking points, the target carriers include the carrier A and the carrier B, and the electronic device may generate the transport task 1 according to the carrier A and the P1 parking point, and generate the transport task 2 according to the carrier B and the P2 parking point. Then, the electronic device may perform the step S304 to send the transport task 1 to the first robot 1 and the transport task 2 to the first robot 2 to transport the carrier A to the P1 parking point by the first robot 1 and the carrier B to the P2 parking point by the second robot.

In some embodiments, the electronic device may generate a transport task corresponding to each piece of cargo information according to the number of the target carriers and the number of the idle parking points. For example, the parking point corresponding to each target carrier may be determined among the plurality of idle parking points according to the number of the target carriers and the number of the idle parking points. After determining the target parking point corresponding to each target carrier, a transport task may be generated to instruct the first robot to transport each target carrier to the corresponding idle parking point.

By way of example, when the number of target carriers is less than or equal to the number of idle parking points, a parking point corresponding to each target carrier may be randomly determined among the plurality of idle parking points, or according to the distance between each target carrier and each idle parking point, the idle parking point closer to each target carrier may be determined to be the parking point corresponding to the target carrier, which is not limited by embodiments of the present disclosure.

For example, in a case where the P1 parking point and P2 parking point among the plurality of parking points are idle parking points, the preset carrier number is 1, and the target carriers include the carrier A and the carrier B. If the P1 parking point is closer to the carrier A, and the P2 parking point is closer to the carrier B, then the P1 parking point may be determined as an idle parking point corresponding to the carrier A, and the P2 parking point may be determined as an idle parking point corresponding to the carrier B.

For another example, when the preset carrier number is greater than 1, if the P1 parking point is determined as an idle parking point corresponding to the carrier A, and after the carrier A is parked at the P1 parking point, if the number of carriers parked at the P1 parking point is still less than the preset carrier number, i.e., the P1 parking point is still the idle parking point, the P1 parking point may also be determined as an idle parking point corresponding to the carrier B.

By way of example, when the number of target carriers is greater than the number of idle parking points, part of the target carriers may be transported to the idle parking point, and another part of the target carriers may be transported to a non-idle parking point (e.g., a parking point where at least one carrier is parked); or all of the target carriers may be transported to the idle parking point. When all of the target carriers are transported to the idle parking point, a plurality of target carriers are parked at at least one idle parking point.

For example, when the preset carrier number is 1, if the target carriers include the carrier A, the carrier B, and the carrier C, and the idle parking point of the target workstation is the P1 parking point, the carrier A may be transported to the P1 parking point, and the carrier B and the carrier C may be transported to the other non-idle parking points (such as a same non-idle parking point or a different non-idle parking point); or it is possible to transport all of the carriers A, B, and C to the P1 parking point, in which case after the carrier A is transported to the P1 parking point, the P1 parking point is the non-idle parking point, and the carriers B and C are transported to the non-idle P1 parking point.

In some examples, when the target carrier is transported to a non-idle parking point, the non-idle parking point corresponding to the target carrier (which may also be referred to as a target parking point) may be determined according to steps S3024-S3025 in the following embodiments.

In S3024: in a case where there is no idle parking point among the plurality of parking points of the target workstation, determining a target parking point among the plurality of parking points of the target workstation based on an estimated picking duration of the target carrier and the picking duration of at least one carrier parking at each parking point.

In some embodiments, in a case where there is no idle parking point among the plurality of parking points of the target workstation, an estimated picking duration of each target carrier and the picking duration of at least one carrier parking at each parking point may be determined; and a target parking point may be determined among the plurality of parking points of the target workstation based on the estimated picking duration of the target carrier and the picking duration of the at least one carrier parked at each parking point.

By way of example, the preset picking duration of the target carrier may be determined according to the number of target cargo on the target carrier and/or the average duration required for the picking device to take the target cargo from the target carrier. For example, the longer the average duration required for taking the target cargo from the target carrier, and/or the larger the number of target cargo on the target carrier, the longer the estimated picking duration of the target carrier.

In some examples, the average duration required for the picking device to take the target cargo from the target carrier varies when the target cargoes are positioned differently on the target carrier. For example, when the target cargo is located in an interior cargo location of the target carrier, the duration required for the picking device to take the target cargo from the target carrier is longer, and when the target cargo is located in an exterior cargo location of the target carrier, the duration required for the picking device to take the target cargo from the target carrier is shorter.

For example, a first average duration for the picking device to take a cargo from the interior cargo location may be determined according to a duration for the picking device to take a cargo from each interior cargo location on each carrier, and a second average duration for the picking device to take a cargo from the exterior cargo location may be determined according to a duration for the picking device to take a cargo from each exterior cargo location on each carrier. Therefore, the estimated picking duration of the target carrier may be determined according to the number of target cargoes, the location of each target cargo on the target carrier (i.e., interior or exterior cargo location), the first average duration, and the second average duration.

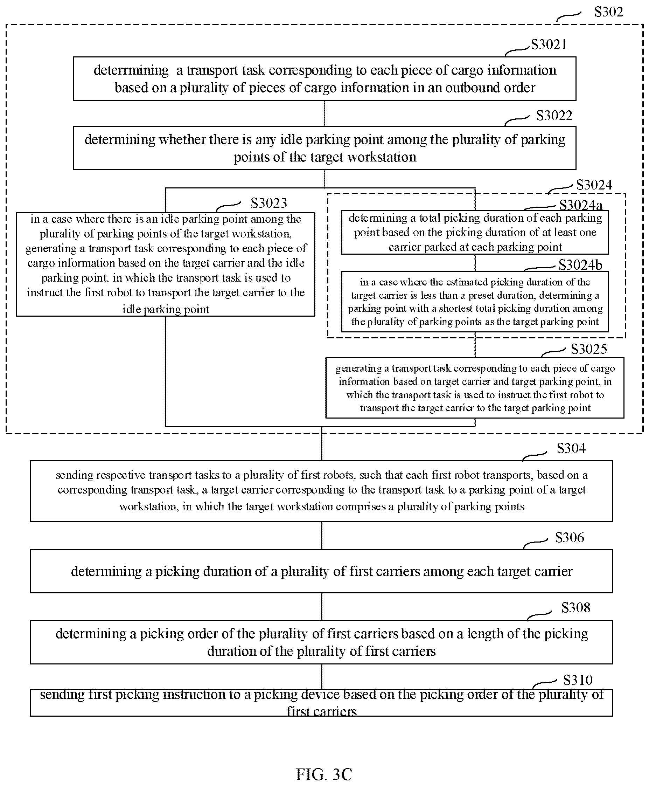

FIG. 3C is a flowchart of still another picking method provided by an embodiment of the present disclosure. As illustrated in FIG. 3C, the step S3024 may include steps S3024a to S3024b as follows.

In S3024a: a total picking duration of each parking point is determined based on the picking duration of at least one carrier parked at each parking point.

In some embodiments, the electronic device determines a total picking duration of each parking point by determining a sum of the picking duration of each carrier of the at least one carrier parked at each parking point.

In some examples, the total picking duration of the parking point may be the sum of the picking duration of each carrier parked at the parking point.

For example, if the at least one carrier parked at the P4 parking point of the target workstation includes a carrier Q, a carrier W, a carrier E, and a carrier R. The picking duration of the carrier Q is 2 min, the picking duration of the carrier W is 4 min, the picking duration of the carrier E is 1 min, and the picking duration of the carrier R is 3 min, then the total picking duration of the P4 parking point is the sum of the picking duration of the carrier Q, the carrier W, the carrier E, and the carrier R, i.e. the total picking duration of the P4 parking point is 10 min.

In S3024b: in a case where the estimated picking duration of the target carrier is less than a preset duration, a parking point with a shortest total picking duration among the plurality of parking points is determined as the target parking point.

In some embodiments, after the electronic device determines the estimated picking duration of the target carrier, it further determines a magnitude relationship between the estimated picking duration of the target carrier and the preset duration. The preset duration may be set according to the needs, and embodiments of the present disclosure do not limit the magnitude of the preset duration.

For example, when the estimated picking duration of the target carrier is small, e.g., less than the preset duration, it is indicated that the picking may be preferentially performed when the target carrier is transported to the target workstation so that the target carrier may be released as soon as possible, and in this case the target carrier may be transported to a non-idle parking point to wait for the execution of the picking operation. When the estimated picking duration of the target carrier is large, e.g., greater than or equal to the preset duration, it is indicated that there is a longer waiting time for the execution of the picking operation after the target carrier is transported to the target workstation so that the target carrier may not be released as soon as possible, and in this case, there is no need to transport the target carrier to a non-idle parking point to wait for the execution of the picking operation.

By way of example, in a case where the estimated picking duration of the target carrier is less than a preset duration, a parking point with a shortest total picking duration among the plurality of parking points is determined as the target parking point corresponding to the target carrier according to the total picking duration of each parking point. Since the estimated picking duration of the target carrier is short, by determining the parking point with the shortest total picking duration as the target parking point, it is possible to shorten the waiting duration for the robot to transport the target carrier, and to improve the transport efficiency of the robot.

For example, in a case where the estimated picking duration of the target carrier is less than the preset duration, if the total picking duration at the P3 parking point is the shortest among the P1 parking point, the P2 parking point and the P3 parking point, the P3 parking point may be determined as the target parking point.

In S3025: a transport task corresponding to each piece of cargo information is generated based on target carrier and target parking point, the transport task is used to instruct the first robot to transport the target carrier to the target parking point.

In some embodiments, after the electronic device executes S3023, if the target carrier does not complete the transport, the electronic device may execute S3022 again to determine whether there is an idle parking point among the plurality of parking points of the target workstation. Then, S3023 is executed again in a case where there is an idle parking point among the plurality of parking points of the target workstation, or S3024 and S3025 are executed in a case where there is no idle parking point among the plurality of parking points of the target workstation to cause the robot to transport all of the target carriers determined by the execution of S3021 by the electronic device to the parking points of the target workstation.

In S304: respective transport tasks are sent to a plurality of first robots, such that each first robot transports, based on a corresponding transport task, a target carrier corresponding to the transport task to a parking point of a target workstation, in which the target workstation includes a plurality of parking points.

In some embodiments, when the electronic device generates a transport task corresponding to each piece of cargo information, it may send the transport task to the corresponding robot. If the target carrier corresponding to the plurality of transport tasks is the same carrier, the robot performing the plurality of transport tasks is the same first robot; if the target carriers corresponding to the plurality of transport tasks are different, each transport task may correspond to a single first robot, or part of the transport tasks may correspond to a single first robot.

By way of example, when the first robot receives the transport task, the first robot may, according to the transport task, travel to the location of the target carrier in accordance with a traveling path in the transport task, to transport the target carrier to the parking point of the target workstation. The parking point of the target workstation includes an idle parking point and/or a target parking point.

In some embodiments, each workstation corresponds to at least one outbound order, and in a case where the workstation corresponds to a plurality of outbound orders, the plurality of robots operate in accordance with a traveling path according to the transport task, to transport the target carrier to a parking point of the target workstation.

In S306: the picking duration of the plurality of first carriers in each target carrier is determined.

In some embodiments, the picking duration of the first carrier includes a first duration required for the first robot to transport the first carrier to a parking point of the target workstation, a second duration required for the picking device to take the target cargo box storing the target cargo on the target carrier to the target workstation, a third duration for picking at the target workstation, and a fourth duration required for the picking device to put the target cargo box back from the target workstation to the target carrier. For example, the picking duration of the first carrier may be the total duration of the first duration, the second duration, the third duration, and the fourth duration.

It should be noted that the manner of determining the picking duration of each target carrier of the plurality of target carriers is similar to the manner of determining the picking duration of the first carrier, and embodiments of the present disclosure are illustrated by way of example with the picking duration of the first carrier.

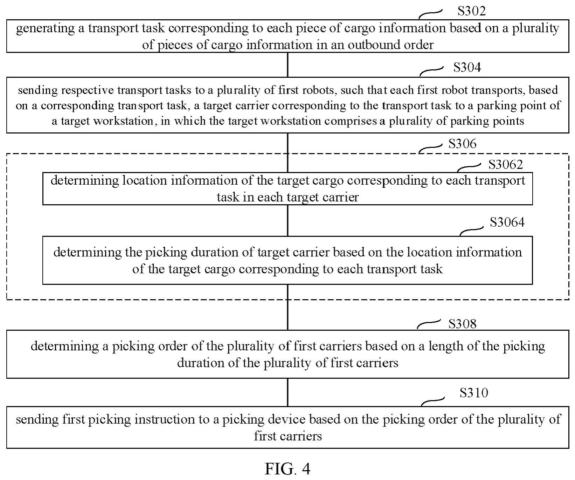

FIG. 4 is a flowchart of still another picking method provided by an embodiment of the present disclosure. As illustrated in FIG. 4, the step S306 includes steps S3062 to S3064 as follows.

In S3062: location information of the target cargo corresponding to each transport task in each target carrier is determined.

That is to say: location information of each target cargo location corresponding to each transport task stored in the target carrier may be determined according to the transport task.

In S3064: the picking duration of target carrier is determined based on the location information of the target cargo corresponding to each transport task.

In some examples, the picking duration includes a first duration required for the first robot to transport the first carrier to a parking point of the target workstation, a duration required for the picking device to take out the target cargo box storing the target cargo from the target carrier, a picking duration for the target cargo, and a duration required for the picking device to put the target cargo box back to the target carrier after the picking of the target cargo is completed.

In some embodiments, each transport task includes location position of a corresponding to-be-picked cargo in the target carrier, and when the each transport task is obtained, the location information of the target cargo corresponding to all the transport tasks in the target carrier may be obtained for each target carrier. According to a preset movement speed of the picking device, and the location information of the target cargo corresponding to each transport task, then it is possible to calculate the time required for the picking device to move to the location of the target cargo in the target carrier, to take the target cargo box storing the target cargo to a cargo placement part of the target workstation, and the time for the target cargo box to be placed back to the target carrier, which means that the picking duration for the each target carrier is determined.

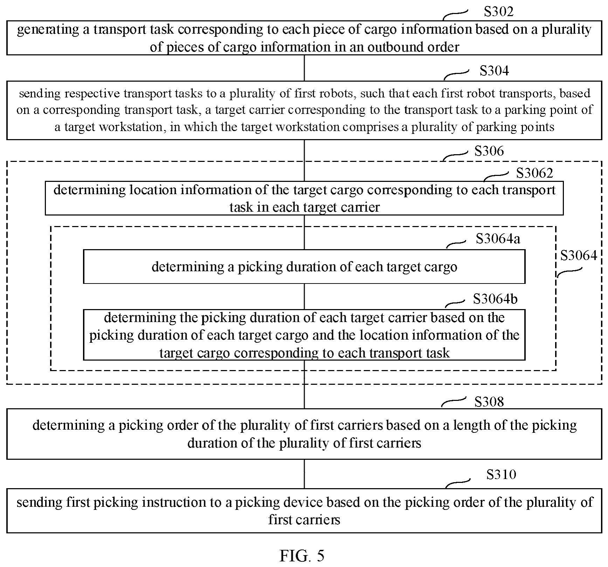

FIG. 5 is a flowchart of still another picking method provided by an embodiment of the present disclosure. As illustrated in FIG. 5, the step S3064 includes steps as follows.

In S3064a: a picking duration of each target cargo is determined.

In some examples, the picking duration of the target cargo may include the duration for a staff to take a preset amount of the target cargoes from the target cargo box, or the time for the picking device to take a preset amount of the target cargoes from the target cargo box.

In S3064b: the picking duration of each target carrier is determined based on the picking duration of each target cargo and the location information of the target cargo corresponding to each transport task.

By way of example, based on the location information of the target cargo corresponding to each transport task, a duration for the picking device to retrieve and return (or take) the target cargo is determined, and the duration for the picking device to retrieve and return the target cargo box is added to the picking duration of the target cargo, to determine the picking duration of each target carrier.

In S308, a picking order of the plurality of first carriers is determined based on a length of the picking duration of the plurality of first carriers.

By way of example, the shorter the picking duration of the first carrier, the earlier the picking order of the target carrier. It should be noted that the manner of determining the picking order of the plurality of target carriers based on the picking duration of each target carrier is similar to the manner of determining the picking order of the plurality of first carriers based on the picking duration of the first carrier in S308, and embodiments of the present disclosure are illustrated by way of example with the first carrier.

For example, the plurality of first carriers include a carrier Q, a carrier W, a carrier E, and a carrier R. The picking duration of the carrier Q is 2 min, the picking duration of the carrier W is 4 min, the picking duration of the carrier E is 1 min, and the picking duration of the carrier R is 3 min. Then, according to the length of the picking duration of each first carrier, the picking order of the plurality of first carriers is as follows: the carrier E (with the shortest picking duration), the carrier Q, the carrier R, and the carrier W (with the longest picking duration).

In some embodiments, the number of first carriers parked at each parking point may be one or a plurality. In a case where the number of first carriers parked at each parking point is a plurality, the plurality of first carriers need to be picked in accordance with a parking order.

In some examples, the picking order of the plurality of first carriers may be determined based on a length of the picking duration of each first carrier and parking locations of the plurality of first carriers at each parking point. In the same parking point, the closer the parking position is to the position of the picking device, the earlier the picking order of the first carrier is, and the shorter the picking duration, the earlier the picking order of the first carrier is.

For example, the at least one carrier parked at the P3 parking point of the target workstation includes a carrier E and a carrier R sequentially. The picking duration of the carrier E is 3 min and the picking duration of the carrier F is 1 min; the at least one first carrier parked at the P4 parking point includes the carrier Q, the carrier W and the carrier R sequentially. The picking duration of the carrier Q is 2 min, the picking duration of the carrier W is 4 min, and the picking duration of the carrier R is 3 min. Since the picking duration of the current to-be-picked carrier (i.e., the carrier Q) at the P4 parking point is smaller than the picking duration of the current to-be-picked carrier (i.e., carrier E) at the P3 parking point, the picking of the carrier Q at the P4 parking point may be preferentially performed; when the picking of the carrier Q is completed, the carrier Q is moved away from the target workstation, and the carrier W becomes the current to-be-picked carrier at the P4 parking point; the picking duration of the current to-be-picked carrier at the P4 parking point (i.e., carrier W) and the current to-be-picked carrier at the P3 parking point (i.e., the carrier E) is continued to be determined; the picking duration of the current to-be-picked carrier at the P3 parking point (i.e., the carrier E) is less than the picking duration of the current to-be-picked carrier at the P4 parking point (i.e., the carrier W), thus the picking device may next perform the picking on the carrier E at the P3 parking point, and so on, and the picking order of the plurality of first carriers at the target workstation is in the following order: the carrier Q, the carrier E, the carrier F, the carrier W, and the carrier R.

In other words, in the case of a plurality of first carriers parked at a single parking point, the picking is performed on the plurality of first carriers both according to the length of the picking duration and according to the parking order of the plurality of first carriers.

In S310, a first picking instruction is sent to the picking device based on the picking order of the plurality of first carriers.

The first picking instruction is used to instruct the picking device to transport a target cargo in each first carrier to the target workstation in accordance with the picking order of the plurality of first carriers. The target picking instruction includes the first picking instruction.

In some examples, when the picking order of the plurality of first carriers is determined, a first picking instruction may be sent to the picking device in sequence according to the picking order of each first carrier, and the first picking instruction includes location information of the target cargo of the first carrier.

In some other examples, when the picking order of the plurality of first carriers is determined, a first picking instruction may be sent to the picking device in sequence in accordance with the first carrier, and the first picking instruction includes the picking order of each first carrier.

In some embodiments, the electronic device in a case of receiving a picking completion signal sent by the target workstation, controls a first robot corresponding to a target carrier to transport the target carrier back to a cargo storage area.

In some examples, the electronic device, in case of receiving a picking completion signal of one target carrier sent by target workstation, may control the first robot corresponding to the target carrier to transport the target carrier from the target workstation to the cargo storage area. The first robot for transporting the target carrier back to the cargo storage area may be a robot transporting the target carrier from the cargo storage area to the target workstation, or may be another idle first robot, which is not limited by embodiments of the present disclosure.

In the picking method provided by embodiments of the present disclosure, a transport task corresponding to each piece of cargo information is generated based on the plurality of pieces of cargo information in an outbound order, respective transport tasks are sent to the plurality of first robots, such that each first robot transports, based on the corresponding transport task, the target carrier corresponding to the transport task to the parking point of the target workstation. After the picking duration of the plurality of first carriers among each target carrier is determined, the picking order of the plurality of first carriers is determined based on a rule that the shorter the picking duration, the earlier the picking order, and a first picking instruction is sent to the picking device, such that the picking device transports the target cargo in the first carrier to the target workstation in accordance with the picking order of the plurality of target carriers. The picking method provided by embodiments of the present disclosure prioritizes picking by sending the picking instruction to the first carrier with the shortest picking duration first. This allows the robot waiting at the parking point to quickly transport the target carrier back to its initial location after the picking device completes the picking operation, to perform other transport tasks, reducing the total rest time of the robots at the plurality of parking points of the workstation and improving the utilization rate of the robots.

The above embodiments describe the picking method. In this method, the picking order is determined based on the picking duration of each carrier by determining the picking duration of each carrier, and the picking device performs the picking based on the picking order, reducing the total rest time of the robots at the plurality of parking points of the workstation. In order to meet different business requirements, the priority of each transport task may be preferentially considered, and the picking method is explained below in an embodiment.

In some embodiments, before determining the picking order of the each target carrier according to the picking duration, the picking order of the each target carrier with different picking priorities may be determined according to the level of the picking priority of each target carrier among the plurality of target carriers, and then the picking order of the each target carrier with the same picking priority may be further determined according to S308.

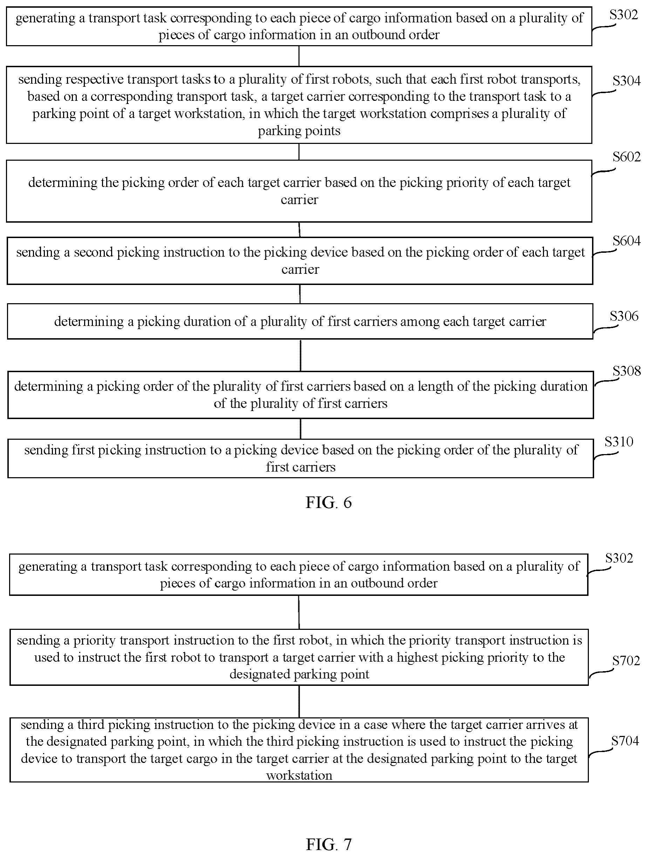

FIG. 6 is a flowchart of still another picking method provided by an embodiment of the present disclosure. As illustrated in FIG. 6, before S306, the picking method further includes S602-S604 as follows.

In S602: the picking order of each target carrier is determined based on the picking priority of each target carrier.

In some examples, the picking priority of the target carrier may be determined based on the priority of an order (e.g., an outbound order). For example, the outbound order includes a priority identifier, and the priority identifier is used to indicate the priority of each to-be-picked cargo in the outbound order, i.e., the cargo information includes the priority of each to-be-picked cargo.

In some examples, the picking priority of each target carrier may be determined according to the priority of each piece of cargo information in the transport task. If the target carrier corresponds to a plurality of transport tasks, the picking priority of the target carrier may be determined based on the priority of the plurality of pieces of cargo information in each transport task. For example, an average of the priorities corresponding to the plurality of pieces of cargo information in each transport task may be used as the picking priority of the target carrier; or the highest priority among the priorities of the plurality of pieces of cargo information in each transport task may be used as the picking priority of the target carrier.

In some embodiments, the plurality of target carriers include a plurality of first carriers and at least one second carrier, the plurality of first carriers have the same picking priority, and the picking priority of the second carrier is higher than the picking priority of the first carrier, thus the picking order of the plurality of target carriers is the second carrier and the first carrier, that is, the picking is performed preferentially on the second carrier, and the picking is then performed on the plurality of first carriers.

It should be noted that each second carrier of the at least one second carrier has a different picking priority, and each second carrier has a higher picking priority than the first carrier. The picking order of the at least one second carrier may be determined according to the level of the picking priority of each second carrier, and the picking order of the plurality of first carriers may be determined according to the picking duration of each first carrier (e.g., S308).

For example, the plurality of target carriers includes a carrier Z, a carrier X, a carrier C, and a carrier V, the picking priority of the carrier X and the carrier C is the third level, the picking priority of the carrier Z is the first level, and the picking priority of the carrier V is the second level, and since the picking priority of the carrier Z is higher than the picking priority of the carrier V, and the picking priority of the carrier V is higher than the picking priority of the carrier X and the carrier C (the smaller the value of the picking priority, the higher the picking priority), then the picking order of the carrier Z is earlier than that of the carrier V and the picking order of the carrier V is earlier than that of the carrier X and the carrier C. Since the carrier X and the carrier C have the same picking priority, the picking order of the carrier X and the carrier C may be determined based on the picking duration of the carrier C and the carrier X. If the carrier C has a shorter picking duration than the carrier X, the picking order of the carrier C is earlier than that of the carrier X. If the carrier C has a longer picking duration than that of the carrier X, the picking order of the carrier C is later than that of the carrier X.

In some embodiments, in a case where the number of target carriers parked at each parking point is a plurality and the plurality of target carriers are to be queued for picking, the electronic device may determine the picking order of the plurality of target carriers based on the level of the picking priority of each target carrier and the parking location of each target carrier at each parking point. The closer the parking location of the target carrier is to the location of the picking device in the same parking point, the earlier the picking order of the target carrier is, and the higher the picking priority of the target carrier, the earlier the picking order of the target carrier is. When the parking location of the target carrier at each parking point is the same and the picking priority is also the same, the electronic device performs S308 to determine the picking order according to the picking duration of the target carrier.

For example, the target carrier parked at the P1 parking point includes a carrier G, a carrier H, and a carrier I sequentially. The target carrier parked at the P2 parking point includes a carrier Z, a carrier X, a carrier C, and a carrier V sequentially. The picking priority of the carrier X and the carrier C is the third level, the picking priority of the carrier V, the carrier I and the carrier G is the second level, and the picking priority of the carrier Z and the carrier H is the first level. Since the picking priority of the current to-be-picked carrier (i.e., the carrier G) at the P1 parking point is lower than the picking priority of the current to-be-picked carrier (i.e., carrier Z) at the P2 parking point, the picking of the carrier Z at the P2 parking point may be preferentially performed; after the picking of the carrier Z is completed, the carrier Z is moved away from the target workstation, and the carrier X becomes the current to-be-picked carrier at the P2 parking point; the picking priority of the current to-be-picked carrier at the P2 parking point (i.e., carrier X) and the current to-be-picked carrier at the P1 parking point (i.e., the carrier G) is further determined; the picking priority (i.e., the second level) of the current to-be-picked carrier at the P1 parking point (i.e., the carrier G) is higher than the picking priority (i.e., the third level) of the current to-be-picked carrier at the P2 parking point (i.e., the carrier X), thus the picking device may next perform the picking on the carrier G at the P1 parking point, and so on, and the picking order of the plurality of target carriers at the target workstation is in the following order: the carrier Z, the carrier G, the carrier H, the carrier I, the carrier X, the carrier C, and the carrier V.

In some other embodiments, the picking priority of the second carrier may also be lower than the picking priority of the first carrier, and when the picking priority of the second carrier is lower than that of the first carrier, the picking order of the plurality of target carriers is the first carrier and the second carrier. That is, after the plurality of first carriers complete the picking, the picking priority of the second carrier is determined according to the picking priority of each second carrier among the at least one second carrier. It should be noted that embodiments of the present disclosure do not limit the order of the priorities of the first carrier and the second carrier, and embodiments of the present disclosure are illustrated by way of example with the picking priority of the second carrier being higher than the picking priority of the first carrier.

In S604, a second picking instruction is sent to the picking device based on the picking order of each target carrier.

The second picking instruction is used to instruct the picking device to transport a target cargo in the second carrier to the target workstation in accordance with the picking order of each target carrier. The target picking instruction includes a second picking instruction.

In some examples, the second picking instruction may carry a picking order for all of the target carriers. The second picking instruction may be sent to the picking device, and the picking device sequentially transports the target cargo in the second carrier to the target workstation in accordance with the second picking instruction.

In some other examples, the second picking instruction may also only carry a picking order for one of the target carriers. The second picking instruction may be sent to the picking device sequentially in accordance with the picking order of each target carrier, such that the picking device transports the target cargo in the second carrier to the target workstation.

In the picking method provided by embodiments of the present disclosure, the picking order of each target carrier is determined based on the level of the picking order of each target carrier; and the second picking instruction is sent to the picking device based on the picking order of each target carrier, to instruct the picking device to transport a target cargo in the second carrier to the target workstation in accordance with the picking order of each target carrier. In embodiments of the present disclosure, the plurality of target carriers include a plurality of first carriers and at least one second carrier, the plurality of first carriers have the same picking priority, and the picking priority of the second carrier is higher than the picking priority of the first carrier, thus, it is possible to meet the different needs of customers and enable the picking operations by the picking device based on the picking priority.

In some embodiments, each parking point of the target workstation includes a designated parking point, and the designated parking point is used to place a carrier with a highest picking priority. For example, with continued reference to FIG. 1, among the plurality of parking points at the target workstation, the P2 parking point may be the designated parking point.

FIG. 7 is a flowchart of still another picking method provided by an embodiment of the present disclosure. As illustrated in FIG. 7, after step 302, the method further includes steps S702 to S704 as follows.

In S702: a priority transport instruction is sent to the first robot, the priority transport instruction is used to instruct the first robot to transport a target carrier with a highest picking priority to the designated parking point.

In some examples, after obtaining each transport task, the picking priority of each target carrier may be determined based on the priority of each piece of cargo information in each transport task, and a priority transport instruction may be sent to the first robot, to cause the robot to transport the target carrier with the highest picking priority to the designated parking point based on the priority transport instruction.

In S704: a third picking instruction is sent to the picking device in a case where the target carrier arrives at the designated parking point, and the third picking instruction is used to instruct the picking device to transport the target cargo in the target carrier at the designated parking point to the target workstation.

In some examples, the electronic device may send the third picking instruction to the picking device when the electronic device detects, by the detection device, that the picking device transports the target carrier with the highest picking priority to the designated parking point. The detection device may include a camera and the like. The third picking instruction carries the location information of the target cargo in the target carrier.

In the picking method provided by embodiments of the present disclosure, when receiving the third picking instruction the picking device may preferentially respond to the third picking instruction, to transport the target cargo in the target carrier at the designated parking point to the target workstation. The picking device may perform the picking based on the picking priority, to better meet customer needs.

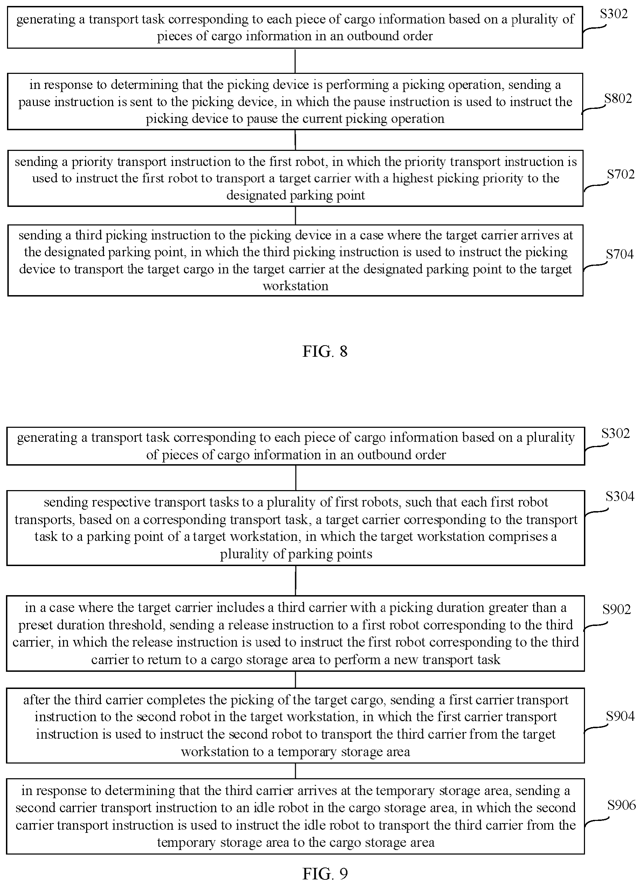

FIG. 8 is a flowchart of still another picking method provided by an embodiment of the present disclosure. As illustrated in FIG. 8, before step S702, the picking method further includes following step.

In S802: in response to determining that the picking device is performing a picking operation, a pause instruction is sent to the picking device, and the pause instruction is used to instruct the picking device to pause the current picking operation.

In some examples: when the electronic device determines that the picking device is responding to the first picking instruction or the second picking instruction, a pause instruction is sent to the picking device, such that the picking device pauses the current picking operation.

In some other examples, after determining that the picking device has paused the current picking operation, a return box instruction is sent to the picking device, and the operation of step S702 is performed after placing the target cargo at the target workstation onto a corresponding target carrier.

FIG. 9 is a flowchart of still another picking method provided by an embodiment of the present disclosure. As illustrated in FIG. 9, after step S304, the picking method further includes steps S902 to S906 as follows.

In S902: in a case where the target carrier includes a third carrier with a picking duration greater than a preset duration threshold, a release instruction is sent to a first robot corresponding to the third carrier, and the release instruction is used to instruct the first robot corresponding to the third carrier to return to a cargo storage area to perform a new transport task.

In some examples, after determining the picking duration of each target carrier, a carrier with a picking duration greater than the preset duration threshold among each target carrier may be used as the third carrier. After the first robot transports the third carrier to the parking point of the target workstation, the release instruction may be sent to the first robot corresponding to the third carrier (i.e., the first robot transporting the third carrier) to release the first robot waiting at the parking point.

In the picking method provided by embodiments of the present disclosure, the first robot corresponding to the target carrier may be released when the picking duration of the target carrier is long, such as greater than the preset duration threshold, such that the first robot may return to the cargo storage area to perform a new transport task, which may reduce the working duration of the robot staying at the parking point and improve the utilization rate of the robot.

In S904: after the third carrier completes the picking of the target cargo, a first carrier transport instruction is sent to the second robot in the target workstation, and the first carrier transport instruction is used to instruct the second robot to transport the third carrier from the target workstation to a temporary storage area.

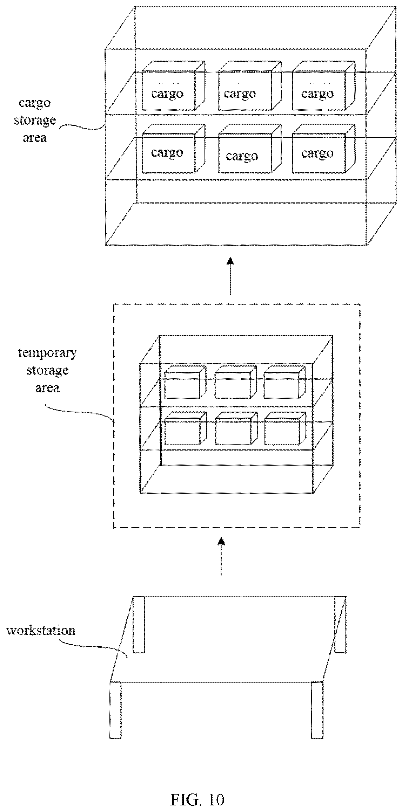

FIG. 10 is a schematic block diagram of a scenario of a temporary storage area provided by an embodiment of the present disclosure. As illustrated in FIG. 10, the temporary storage area may be located between the cargo storage area and the workstation. The second robot is a robot reserved in the target workstation.

By way of example, after the electronic device receives a picking complete instruction of the target workstation, i.e., after the third carrier completes the picking of the target cargo, a first carrier transport instruction is sent to the second robot in the target workstation.

In an example, before sending the first carrier transport instruction to the second robot in the target workstation, a work status of the first robot may be obtained, and if each first robot is in a processing task, the step of sending the first carrier transport instruction to the second robot in the target workstation may be further performed.

In S906: in response to determining that the third carrier arrives at the temporary storage area, a second carrier transport instruction is sent to an idle robot in the cargo storage area, and the second carrier transport instruction is used to instruct the idle robot to transport the third carrier from the temporary storage area to the cargo storage area.

In some examples, after the second robot transports the third carrier to the temporary storage area, an idle state robot may be continued to be determined in the cargo storage area for transporting the third carrier from the temporary storage area back to the cargo storage area. The idle robot may be any idle state robot in the cargo storage area or an idle state robot closest to the third carrier, which is not limited by embodiments of the present disclosure.

In the picking method provided by embodiments of the present disclosure, after completing the cargo picking, the corresponding third carrier is transported to the temporary storage area by the second robot reserved at the workstation, and then, the third carrier is transported back from the temporary storage area to the initial position in the cargo storage area by the idle first robot, which can enhance the collaborative work between each robot and increase the work efficiency of the robot.

The above embodiments illustrate the picking method with a control device (e.g., an electronic device) as the subject of execution, and are now illustrated with a picking device as the subject of execution.

In some embodiments, the picking method includes receiving a target picking instruction; and in a case where each first robot among a plurality of first robots transports, based on a corresponding transport task, a target carrier corresponding to the transport task to a parking point of a target workstation, in response to the target picking instruction, transporting a target cargo on each target carrier to the target workstation, in which the workstation includes a plurality of parking points, the picking order of the plurality of target carriers is determined based on picking information of each target carrier among the plurality of target carriers, and the picking information includes a picking duration and/or a picking priority.

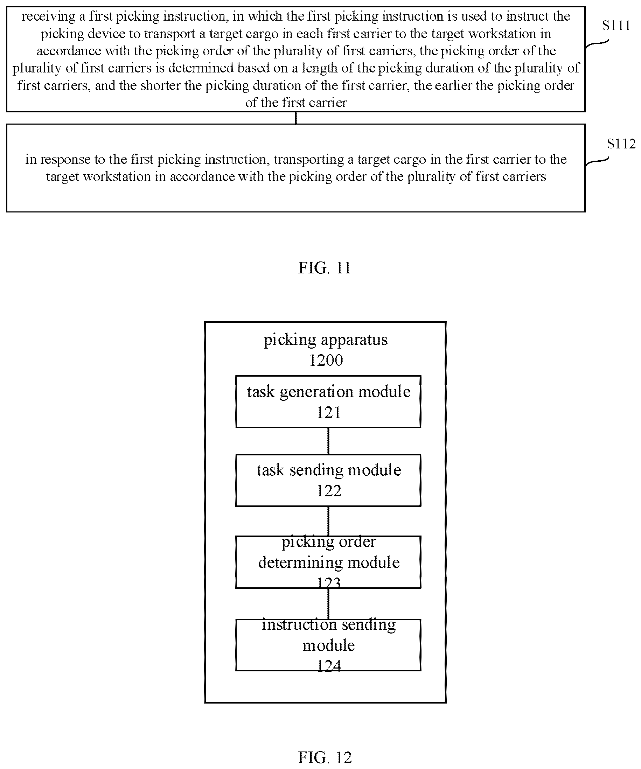

FIG. 11 is a flowchart of still another picking method provided by an embodiment of the present disclosure. It should be noted that the picking method illustrated in FIG. 11 is realized by a picking device. As illustrated in FIG. 11, the picking method includes following steps.

In S111: a first picking instruction is received, and the first picking instruction is used to instruct the picking device to transport a target cargo in each first carrier to the target workstation in accordance with the picking order of the plurality of first carriers, the picking order of the plurality of first carriers is determined based on a length of the picking duration of the plurality of first carriers, and the shorter the picking duration of the first carrier, the earlier the picking order of the first carrier.

In S112: in response to the first picking instruction, a target cargo in the first carrier is transported to the target workstation in accordance with the picking order of the plurality of first carriers.

In some embodiments, the picking method further includes receiving a second picking instruction, the second picking instruction is an instruction generated after the picking order of each target carrier is determined based on the level of the picking priority of the plurality of target carriers; the plurality of target carriers include a plurality of first carriers and at least one second carrier, the plurality of first carriers have the same picking priority; and the picking priority of the second carrier is higher than the picking priority of the first carrier, the picking order of the second carrier is earlier than that of the first carrier. In response to the second picking instruction, the target cargo in the second carrier is transported to the target workstation in accordance with the picking order of each target carrier.

In some embodiments, the method further includes receiving a priority picking instruction; and in a case where the first robot transports a target carrier with a highest picking priority to a designated parking point, transporting a target cargo on the target carrier with the highest picking priority parking at the designated parking point to the target workstation, in which the plurality of parking points of the target workstation include the designated parking point, and the designated parking point is used to place a carrier with the highest picking priority.

In some embodiments, the picking method further includes receiving a pause instruction, in which the pause instruction is generated by a control device in response to determining that the picking device is performing a picking operation; and in response to the pause instruction, pausing the current picking operation.

With regard to the specific limitations of the picking method with the picking device as the subject of execution and the beneficial effects that may be achieved, reference may be made to the above limitations of the picking method with the control device as the subject of execution, which will not be repeated herein.

Based on the same inventive concept, embodiments of the present disclosure also provide a picking apparatus for realizing the picking method described above. The realization of solving the problem provided by the apparatus is similar to the realization recited in the method described above, so the specific limitations in one or more embodiments of the picking apparatus provided below may be found in the limitations for the picking method described above, which is not repeated herein.

FIG. 12 is a schematic block diagram of a picking apparatus provided by an embodiment of the present disclosure. As illustrated in FIG. 12, the picking apparatus 1200 includes a task generation module 121, a task sending module 122, a picking order determining module 123, and an instruction sending module 124.

The task generation module 121 is configured to generate a transport task corresponding to each piece of cargo information based on a plurality of pieces of cargo information in an outbound order.

The task sending module 122 is configured to send respective transport tasks to a plurality of first robots, such that each first robot transports, based on the corresponding transport task, a target carrier corresponding to the transport task to a parking point of a target workstation, in which the target workstation includes a plurality of parking points.

The picking order determining module 123 is configured to determine a picking order of the plurality of target carriers based on picking information of each target carrier among the plurality of target carriers, in which the picking information includes a picking duration and/or a picking priority.

The instruction sending module 124 is configured to send a target picking instruction to a picking device based on the picking order of the plurality of target carriers, in which the target picking instruction is used to instruct the picking device to transport a target cargo in the target carrier to the target workstation.

In some embodiments, the picking order determining module 123 is configured to determine the picking order of the plurality of target carriers based on the picking priority of each target carrier, in which the higher the picking priority of the target carrier, the earlier the picking order of the target carrier; or determine the picking order of the plurality of target carriers based on the picking duration of each target carrier, in which the shorter the picking duration of the target carrier, the earlier the picking order of the target carrier; or determine the picking order of the plurality of target carriers based on the picking priority and the picking duration of each target carrier.

In some embodiments, the picking order determining module 123 is configured to: in a case where the plurality of target carriers include a plurality of first carriers and at least one second carrier and the picking priorities of the first carrier and the second carrier are different, determine a picking order of the plurality of first carriers and the at least one second carrier based on the picking priority of the first carrier and the picking priority of the second carrier; or in a case where the plurality of first carriers have a same picking priority, determine the picking duration of each first carrier among the plurality of first carriers and determine the picking order of the plurality of first carriers based on the picking duration of each first carrier.

In some embodiments, the apparatus further includes a duration determining module, the duration determining module is configured to determine location information of a target cargo corresponding to each transport task in each target carrier; and determine the picking duration of each target carrier based on the location information of each target cargo.

In some embodiments, the duration determining module is configured to determine the picking duration of each target cargo on each target carrier; and determine the picking duration of each target carrier based on the picking duration of each target cargo and the location information of each target cargo.

In some embodiments, the task generation module 121 includes a determining unit and a generating unit; the determining unit is configured to determine, based on the plurality of pieces of cargo information in the outbound order, a target carrier corresponding to each piece of cargo information; and determine whether there is any idle parking point among the plurality of parking points at the target workstation. The generating unit is configured to: in a case where there is an idle parking point among the plurality of parking points of the target workstation, generate a transport task corresponding to each piece of cargo information based on the target carrier and the idle parking point, in which the transport task is used to instruct first robot to transport the target carrier to the idle parking point.

In some embodiment, the determining unit is further configured to: in a case where there is no idle parking point among the plurality of parking points of the target workstation, determine a target parking point among the plurality of parking points of the target workstation based on an estimated picking duration of the target carrier and the picking duration of at least one carrier parking at each parking point. The generating unit is further configured to generate a transport task corresponding to each piece of cargo information based on the target carrier and the target parking point, and the transport task is used to instruct the first robot to transport the target carrier to the target parking point.

In some embodiments, the determining unit is further configured to determine a total picking duration of each parking point based on the picking duration of each carrier of the at least one carrier parked at each parking point; and in a case where the estimated picking duration of the target carrier is less than a preset duration, determine a parking point with a shortest total picking duration among the plurality of parking points as the target parking point.

In some embodiments, each parking point of the target workstation includes a designated parking point, and the designated parking point is used to place a carrier with a highest picking priority; the instruction sending module 124 is further configured to send a priority transport instruction to the first robot, in which the priority transport instruction is used to instruct the first robot to transport the target carrier with the highest picking priority to the designated parking point; in a case where the target carrier with the highest picking priority arrives at the designated parking point, send a priority picking instruction to the picking device, in which the priority picking instruction is used to instruct the picking device to transport the target cargo in the target carrier with the highest picking priority parked at the designated parking point to the target workstation.

In some embodiments, the instruction sending module 124 is further configured to in response to determining that the picking device is performing a picking operation, send a pause instruction to the picking device, and the pause instruction is used to instruct the picking device to pause the current picking operation.

In some embodiments, the duration determining module is configured to determine the picking duration of each target carrier of the plurality of target carriers; and the instruction sending module 124 is further configured to in a case where the plurality of target carriers include a third carrier with a picking duration greater than a preset duration threshold, generate a release instruction and send the release instruction to the first robot corresponding to the third carrier, in which the release instruction is used to instruct the first robot corresponding to the third carrier to return to a cargo storage area to perform a new transport task.

In some embodiments, the instruction sending module 124 is further configured to, after the picking device completes picking of the target cargo on the third carrier, send a first carrier transport instruction to a second robot in the target workstation, in which the first carrier transport instruction is used to instruct the second robot to transport the third carrier from the target workstation to a temporary storage area; and in response to determining that the third carrier arrives at the temporary storage area, send the second carrier transport instruction to an idle robot in the cargo storage area, in which the second carrier transport instruction is used to instruct the idle robot to transport the third carrier from the temporary storage area to the cargo storage area.

In some embodiments, the picking apparatus further includes a control module, and the control module is configured to, in a case of receiving a picking completion signal sent by the target workstation, control the first robot corresponding to the target carrier to transport the target carrier back to the cargo storage area.

With regard to the specific limitations of the picking apparatus and the beneficial effects that may be achieved, reference may be made to the above limitations of the picking method, which is not repeated herein.

Embodiments of the present disclosure also provide a picking apparatus for realizing the picking method described above. The realization of solving the problem provided by the apparatus is similar to the realization recited in the method described above, so the specific limitations in one or more embodiments of the picking apparatus provided below may be found in the limitations for the picking method described above, which is not repeated herein.

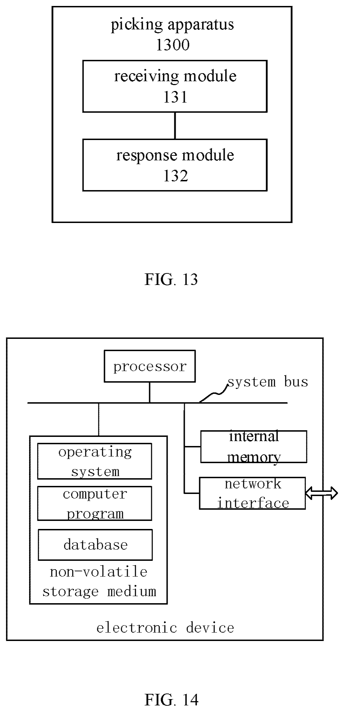

FIG. 13 is another picking apparatus provided by an embodiment of the present disclosure; and as illustrated in FIG. 13, the picking apparatus 1300 includes:
a receiving module 131 configured to receive a target picking instruction;
a response module 132 configured to, in a case where each first robot among a plurality of first robots transports, based on a corresponding transport task, a target carrier corresponding to the transport task to a parking point of a target workstation, in response to the target picking instruction, transport a target cargo on each target carrier to the target workstation in accordance with a picking order of a plurality of target carriers. The target workstation includes a plurality of parking points; the picking order of the plurality of target carriers is determined based on picking information of each target carrier among the plurality of target carriers, and the picking information includes a picking duration and/or a picking priority.

In some embodiments, the receiving module 131 is further configured to receive a priority picking instruction; and the response module 132 is further configured to, in a case where the first robot transports a target carrier with a highest picking priority to a designated parking point, transport a target cargo on the target carrier with the highest picking priority parking at the designated parking point to the target workstation, in which the plurality of parking points of the target workstation include the designated parking point, and the designated parking point is used to place a carrier with the highest picking priority.

In some embodiments, the receiving module 131 is further configured to receive a pause instruction, in which the pause instruction is generated by a control device in response to determining that the picking device is performing a picking operation; and the response module 132 is further configured to, in response to the pause instruction, pause the current picking operation.

FIG. 14 is a structure schematic block diagram of an electronic device provided by an embodiment of the present disclosure. The electronic device may be a server. The electronic device includes a processor, a memory, and a network interface connected via a system bus. The processor of the electronic device is used to provide computing and control capabilities. The memory of the electronic device includes a non-volatile storage medium, and an internal memory. The non-volatile storage medium stores an operating system, a computer program, and a database. The internal memory provides an environment for the operation of the operating system and the computer program in the non-volatile storage medium. The database of the electronic device is used to store an altitude parameter and three-dimensional map data. The network interface of the electronic device is used to communicate with an external terminal via a network connection. The computer program is executed by a processor to implement a picking method.

It may be appreciated by those skilled in the art that the structure illustrated in FIG. 14, which is only a block diagram of a portion of the structure related to the solution of the present disclosure, does not constitute a limitation on the robot and the electronic device to which the solution of the present disclosure is applied, and that specific robot and the electronic device may include more or fewer components than those shown in the drawings, or combine some of the components, or have a different arrangement of components.

In some embodiments, embodiments of the present disclosure provide an electronic device including a processor and a memory, the memory storing a computer program, the processor executes the computer program to implement the steps of the method in any of the above embodiments.

In some embodiments, embodiments of the present disclosure provide a picking device including a processor and a memory, the memory storing a computer program, the processor executes the computer program to implement the steps of the method in any of the above embodiments.

In some embodiments, embodiments of the present disclosure provide a computer-readable storage medium storing a computer program, the processor executes the computer program to implement the steps of the method in any of the above embodiments.

In some embodiments, embodiments of the present disclosure provide a computer program product including a computer program, a processor executes the computer program to implement steps of the method in any of the above embodiments.

It should be noted that the user information (including, but not limited to, user equipment information, user personal information, etc.) and data (including, but not limited to, data used for analysis, data stored, data displayed, etc.) involved in the present disclosure are those that have been authorized by the user or have been fully authorized by the parties. Those skilled in the art shall understand that all or part of the process for realizing the methods of the above-described embodiments may be accomplished by a computer program instructing a relevant hardware, the computer program may be stored in a non-volatile computer-readable storage medium, and when executed, the computer program may include a process of the above-described method embodiments. Any reference to a memory, database, or other medium used in embodiments provided in the present disclosure may include at least one of non-volatile and volatile memory. The non-volatile memory may include Read-Only Memory (ROM), magnetic tape, floppy disk, flash memory, optical memory, high-density embedded non-volatile memory, ReRAM, Magnetoresistive Random Access Memory (MRAM), Ferroelectric Memory (FRAM), Phase Change Memory (PCM), graphene memory, and so on. The volatile memory may include random access memory (RAM) or external cache memory, etc. As an illustration and not as a limitation, RAM can be in various forms, such as Static Random Access Memory (SRAM) or Dynamic Random Access Memory (DRAM), and so on. The databases involved in the embodiments provided in the present disclosure may include at least one of a relational database and a non-relational database. The non-relational databases may include block chain-based distributed databases, etc., without limitation. The processors involved in the embodiments provided in the present disclosure may be general-purpose processors, central processing units, graphics processors, digital signal processors, programmable logics, quantum computing-based data processing logics, and the like, without limitation.

The various technical features of the above embodiments can be combined in any way, and all possible combinations of the various technical features of the above embodiments have not been described for the sake of conciseness of description; however, as long as there is no contradiction in the combinations of these technical features, they should be considered to be within the scope of the present specification.

The above-described embodiments express only several embodiments of the present disclosure, which are described in a more specific and detailed manner, but are not to be construed as a limitation of the patent scope of the present disclosure. It should be noted that for a person of ordinary skill in the art, a number of variations and improvements can be made without departing from the conception of the present disclosure, all of which fall within the scope of protection of the present disclosure. Therefore, the scope of protection of the present disclosure shall be defined by the appended claims.

## Claims

1. A picking method, applied to a control device, comprising:
generating a transport task corresponding to each piece of cargo information based on a plurality of pieces of cargo information in an outbound order;
sending respective transport tasks to a plurality of first robots, such that each first robot transports, based on a corresponding transport task, a target carrier corresponding to the transport task to a parking point of a target workstation, wherein the target workstation comprises a plurality of parking points;
determining a picking order of a plurality of target carriers based on picking information of each target carrier among the plurality of target carriers, wherein the picking information comprises a picking duration and/or a picking priority; and
sending a target picking instruction to a picking device based on the picking order of the plurality of target carriers, wherein the target picking instruction is used to instruct the picking device to transport a target cargo in each target carrier to the target workstation in accordance with the picking order of the plurality of target carriers.

2. The method according to claim 1, wherein determining the picking order of the plurality of target carriers based on the picking information of each target carrier among the plurality of target carriers comprises:
determining the picking order of the plurality of target carriers based on the picking priority of each target carrier, wherein the higher the picking priority of the target carrier, the earlier the picking order of the target carrier; or
determining the picking order of the plurality of target carriers based on the picking duration of each target carrier, wherein the shorter the picking duration of the target carrier, the earlier the picking order of the target carrier; or
determining the picking order of the plurality of target carriers based on the picking priority and the picking duration of each target carrier.

3. The method according to claim 2, wherein determining the picking order of the plurality of target carriers based on the picking priority and the picking duration of each target carrier comprises:
in a case where the plurality of target carriers comprise a plurality of first carriers and at least one second carrier, and the picking priorities of the first carrier and the second carrier are different, determining the picking order of the plurality of first carriers and the at least one second carrier based on the picking priority of the first carrier and the picking priority of the second carrier; and
in a case where the plurality of first carriers have a same picking priority, determining the picking duration of each first carrier among the plurality of first carriers and determining the picking order of the plurality of first carriers based on the picking duration of each first carrier.

4. The method according to claim 1, before determining the picking order of the plurality of target carriers based on the picking information of each target carrier among the plurality of target carriers, further comprising:
determining location information of the target cargo corresponding to each transport task in each target carrier; and
determining the picking duration of each target carrier based on the location information of each target cargo.

5. The method according to claim 4, wherein determining the picking duration of each target carrier based on the location information of each target cargo comprises:
determining a picking duration of each target cargo on each target carrier; and
determining the picking duration of each target carrier based on the picking duration of each target cargo and the location information of each target cargo.

6. The method according to any one of claims 1 to 5, wherein generating the transport task corresponding to each piece of cargo information based on the plurality of pieces of cargo information in the outbound order comprises:
determining a target carrier corresponding to each piece of cargo information based on the plurality of pieces of cargo information in the outbound order;
determining whether there is any idle parking point among the plurality of parking points of the target workstation; and
in a case where there is an idle parking point among the plurality of parking points of the target workstation, generating a transport task corresponding to each piece of cargo information based on the target carrier and the idle parking point, wherein the transport task is used to instruct the first robot to transport the target carrier to the idle parking point.

7. The method according to claim 6, further comprising:
in a case where there is no idle parking point among the plurality of parking points of the target workstation, determining a target parking point among the plurality of parking points of the target workstation based on an estimated picking duration of the target carrier and the picking duration of at least one carrier parking at each parking point of the target workstation; and
generating a transport task corresponding to each piece of cargo information based on the target carrier and the target parking point, wherein the transport task is used to instruct the first robot to transport the target carrier to the target parking point.

8. The method according to claim 7, wherein determining the target parking point among the plurality of parking points of the target workstation based on the estimated picking duration of the target carrier and the picking duration of at least one carrier parking at each parking point of the target workstation comprises:
determining a total picking duration of each parking point based on the picking duration of each carrier of the at least one carrier parking at each parking point; and
in a case where the estimated picking duration of the target carrier is less than a preset duration, determining a parking point with a shortest total picking duration among the plurality of parking points as the target parking point.

9. The method according to any one of claims 1 to 5, wherein the plurality of parking points of the target workstation comprise a designated parking point, the designated parking point is used to place a carrier with a highest picking priority, and the method further comprises:
sending a priority transport instruction to the first robot, wherein the priority transport instruction is used to instruct the first robot to transport the target carrier with a highest picking priority among the plurality of target carriers to the designated parking point; and
sending a priority picking instruction to the picking device in a case where the target carrier with the highest picking priority arrives at the designated parking point, wherein the priority picking instruction is used to instruct the picking device to transport the target cargo on the target carrier with the highest picking priority parking at the designated parking point to the target workstation.

10. The method according to claim 9, before sending the priority picking instruction to the picking device, further comprising:
in response to determining that the picking device is performing a picking operation, sending a pause instruction to the picking device, wherein the pause instruction is used to instruct the picking device to pause the current picking operation.

11. The method according to any one of claims 1 to 5, after the first robot transports, based on the corresponding transport task, the target carrier corresponding to the transport task to the parking point of the target workstation, further comprising:
determining the picking duration of each target carrier among the plurality of target carriers; and
in a case where the plurality of target carriers comprise a third carrier with a picking duration greater than a preset duration threshold, generating a release instruction and sending the release instruction to the first robot corresponding to the third carrier, wherein the release instruction is used to instruct the first robot corresponding to the third carrier to return to a cargo storage area to perform a new transport task.

12. The method according to claim 11, further comprising:
after the picking device completes picking of the target cargo on the third carrier, sending a first carrier transport instruction to a second robot in the target workstation, wherein the first carrier transport instruction is used to instruct the second robot to transport the third carrier from the target workstation to a temporary storage area; and
in response to determining that the third carrier arrives at the temporary storage area, sending a second carrier transport instruction to an idle robot in the cargo storage area, wherein the second carrier transport instruction is used to instruct the idle robot to transport the third carrier from the temporary storage area to the cargo storage area.

13. The method according to any one of claims 1 to 5, further comprising:
in a case of receiving a picking completion signal sent by the target workstation, controlling the first robot corresponding to the target carrier to transport the target carrier back to the cargo storage area.

14. A picking method, applied to a picking device, comprising:
receiving a target picking instruction; and
in a case where each first robot among a plurality of first robots transports, based on a corresponding transport task, a target carrier corresponding to the transport task to a parking point of a target workstation, in response to the target picking instruction, transporting a target cargo on each target carrier to the target workstation in accordance with a picking order of a plurality of target carriers,
wherein the target workstation comprises a plurality of parking points; the picking order of the plurality of target carriers is determined based on picking information of each target carrier among the plurality of target carriers, and the picking information comprises a picking duration and/or a picking priority.

15. The method according to claim 14, further comprising:
receiving a priority picking instruction; and
in a case where the first robot transports a target carrier with a highest picking priority to a designated parking point, transporting a target cargo on the target carrier with the highest picking priority parking at the designated parking point to the target workstation, wherein the plurality of parking points of the target workstation comprise the designated parking point, and the designated parking point is used to place a carrier with the highest picking priority.

16. The method according to claim 14, further comprising:
receiving a pause instruction, wherein the pause instruction is generated by a control device in response to determining that the picking device is performing a picking operation; and
in response to the pause instruction, pausing the current picking operation.

17. A picking apparatus, comprising:
a task generation module configured to generate a transport task corresponding to each piece of cargo information based on a plurality of pieces of cargo information in an outbound order;
a task sending module configured to send respective transport tasks to a plurality of first robots, such that each first robot transports, based on the corresponding transport task, a target carrier corresponding to the transport task to a parking point of a target workstation, wherein the target workstation comprises a plurality of parking points;
a picking order determining module configured to determine a picking order of the plurality of target carriers based on picking information of each target carrier among the plurality of target carriers, wherein the picking information comprises a picking duration and/or a picking priority; and
an instruction sending module configured to send a target picking instruction to a picking device in accordance with the picking order of the target carriers, wherein the target picking instruction is used to instruct the picking device to transport a target cargo on the plurality of target carriers to the target workstation.

18. An electronic device comprising: a memory and a processor, the memory storing a computer program, wherein the processor executes the computer program to implement steps of the picking method according to any one of claims 1 to 16.

19. A computer storage medium storing a computer program, wherein a processor executes the computer program to implement steps of the picking method according to any one of claims 1 to 16.

20. A computer program product comprising a computer program, wherein a processor executes the computer program to implement steps of picking method according to any one of claims 1 to 16.
